Europäisches Patentamt

European Patent Office

Office européen des brevets

(19)

(11) Veröffentlichungsnummer: **0 307 693**
**A2**

(12) # EUROPÄISCHE PATENTANMELDUNG

(21) Anmeldenummer: **88113982.8**

(22) Anmeldetag: **26.08.88**

(51) Int. Cl.⁴: **F16F 13/00**

(30) Priorität: **18.09.87 DE 3731524**

(43) Veröffentlichungstag der Anmeldung:
**22.03.89 Patentblatt 89/12**

(84) Benannte Vertragsstaaten:
**DE ES FR GB IT SE**

(71) Anmelder: **METZELER Gesellschaft mit beschränkter Haftung**
**Gneisenaustrasse 15**
**D-8000 München 50(DE)**

(72) Erfinder: **Kaiser, Franz-Josef**
**Südstrasse 2**
**D-5431 Bannberscheid(DE)**
Erfinder: **Sauer, Wolfgang, Dr.**
**Im Gebück 3a**
**D-5412 Ransbach(DE)**

(74) Vertreter: **Michelis, Theodor, Dipl.-Ing.**
**Gneisenaustrasse 15**
**D-8000 München 50(DE)**

(54) **Hydraulisch dämpfendes Zweikammer-Motorlager.**

(57) Bei einem hydraulisch dämpfenden Zweikammer-Motorlager, in dessen Zwischenplatte eine beidseitig von Flüssigkeit beaufschlagte und parallel zur Richtung eingeleiteter Schwingungen bewegliche Membranplatte aus gummielastischem Material eingespannt ist, ist zur leichten Beweglichkeit dieser Membranplatte und zum geräuschlosen Anschlag bei Schwingungsauslenkungen erfindungsgemäß vorgesehen, daß die mit planparallelen Stirnflächen (22, 23) ausgebildete Membranplatte (20) einen umlaufenden, über einen horizontalen Steg (24) geringer Dicke mit der Membranplatte (20) elastisch verbundenen, zylindrischen Randbereich (25) von mindestens gleicher Höhe wie der Membranplatte (20) aufweist und daß auf Ober- und Unterseite (22, 23) der Membranplatte (20) auf einer gedachten Kreislinie eine Vielzahl von kugelkalottenförmigen Noppen (26, 26′) angeordnet sind.

## FIG.2

## Hydraulisch dämpfendes Zweikammer-Motorlager

Die Erfindung bezieht sich auf ein hydraulisch dämpfendes Zweikammer-Motorlager, dessen mit Flüssigkeit gefüllte und gummielastische Umfangswände aufweisende Kammern über einen, in einer starren Zwischenplatte angeordneten Kanal miteinander in Verbindung stehen und bei dem in die Zwischenplatte eine stirnseitig zumindest zentral offene Kammer eingelassen ist, in der eine beidseitig von Flüssigkeit beaufschlagte und parallel zur Richtung eingeleiteter Schwingungen bewegliche Membranplatte aus gummielastischem Material eingespannt ist.

Ein derartiges Lager mit einer entsprechenden Membranplatte ist beispielsweise aus der DE-OS 34 07 553 bekannt. Diese Membranplatte mit einem T-förmigen, in einer entsprechenden umlaufenden Nut geführten Randbereich ist zur Mitte hin linsenförmig verdickt und somit insgesamt relativ starr. Um dabei Klappergeräusche bei axialen Schwingungen der Membranplatte zu vermeiden, sind die die Membranplatte überdeckenden Bereiche der Zwischenplatte mit nach innen ragenden Vorsprüngen versehen, gegen die die Platte sehr schnell zum Anschlag kommt, wodurch aber auch der axiale Freiweg stark begrenzt wird. Eine weitere Verformung und Durchbeigung der Membranplatte und damit eine weitergehende Entkopplungswirkung erfolgt jedoch nur bei höheren Drücken, so daß insgesamt die Entkopplungswirkung nur relativ gering ist.

Der vorliegenden Erfindung liegt demgegenüber die Aufgabe zugrunde, ein hydraulisch dämpfendes Zweikammer-Motorlager mit einer Membranplatte in der Zwischenplatte zu schaffen, bei der der für die Entkopplung wirksame Bereich der Membranplatte bei insgesamt flüssigkeitsdichter Einspannung sehr leicht beweglich gelagert ist und einen relativ großen Freiweg aufweist, ohne daß bei Schwingungen in axialen Richtungen ein Klappergeräusch auftritt.

Zur Lösung dieser Aufgabe ist erfindungsgemäß vorgesehen, daß die mit planparallelen Stirnflächen ausgebildete Membranplatte einen umlaufenden, über einen horizontalen Steg geringer Dikke mit der Membranplatte elastisch verbundenen zylindrischen Randbereich von mindestens gleicher Höhe wie die der Membranplatte aufweist und daß auf der Ober- und Unterseite der Membranplatte auf einer gedachten Kreislinie in dem Außenumfang benachbarten Bereich eine Vielzahl von kugelkalottenförmigen Noppen angeordnet sind. Dabei ist es zweckmäßig, wenn mindestens vier der Noppen im gleichmäßig über den Umfang verteilten Abstand eine geringfügig größere Höhe als die übrigen Noppen aufweisen.

Mit einer derartigen, sehr flexiblen Anlenkung der eigentlichen Membranplatte an ihren Einspannbereich ist einmal eine leichte Beweglichkeit der Platte gegeben, womit diese eingeleiteten Schwingungen optimal folgen kann. Zum anderen ist durch die Anordnung von Noppen unterschiedlicher Höhe auf den Oberflächen der Membranplatte ein sanftes Anliegen mit sich versteifender Federcharakteristik gegeben, so daß Klappergeräusche sicher vermieden werden.

Dabei kann innerhalb der außenliegenden Noppen eine wei tere, ebenfalls auf einer Kreislinie liegende Reihe von Noppen vorgesehen sein, die eine geringere Höhe als die radial außenliegenden Noppen aufweisen.

Zweckmäßigerweise weist der umlaufende Randbereich der Membranplatte eine größere Höhe als die höchsten Noppen auf und ist allein mit diesem Rand innerhalb der Membrankammer eingespannt.

Zur Versteifung der Membranplatte und zur Erhöhung ihres Gewichtes als Tilgermasse kann in die Membranplatte ein scheibenförmiger Ring aus starrem Material eingebettet sein.

Ferner kann die Membranplatte mit mindestens drei von ihrem Mittelpunkt ausgehenden und die Membranplatte in radialer Richtung auftrennenden Schlitzen versehen sein, mit denen mindestens drei in axialer Richtung abklappbare Kreissegmente freigeschnitten sind. Damit ist eine bei hohen Drücken wirksam werdende Bypaßöffnung geschaffen, die parallel zum eigentlichen Überströmkanal liegt, um einerseits eine zu hohe Beanspruchung der Membranplatte zu verhindern und um andererseits bei großen Anregungsamplituden den Verlauf des Verlustwinkels im Bereich des Extremums über der Frequenz zu verbreitern.

Zur Spannungsentlastung und zur leichteren Beweglichkeit dieser abklappbaren Kreissegmente können die radial außenliegenden Enden der Schlitze kreiszylindrisch aufgeweitet sein. Außerdem kann der geschlitzte Bereich der Membranplatte mindestens auf einer Plattenseite von einer umlaufenden, in die Plattenoberfläche eingeschnittenen Nut umgeben sein.

Anhand einer schematischen Zeichnung sind Aufbau und Wir kungsweise eines Ausführungsbeispiels nach der Erfindung näher erläutert. Dabei zeigen

Fig. 1 einen Längsschnitt durch ein Motorlager im zusammengebauten Zustand,

Fig. 2 einen Längsschnitt durch eine Membranplatte und

Fig. 3 eine Aufsicht auf diese Membranplatte nach Fig. 2.

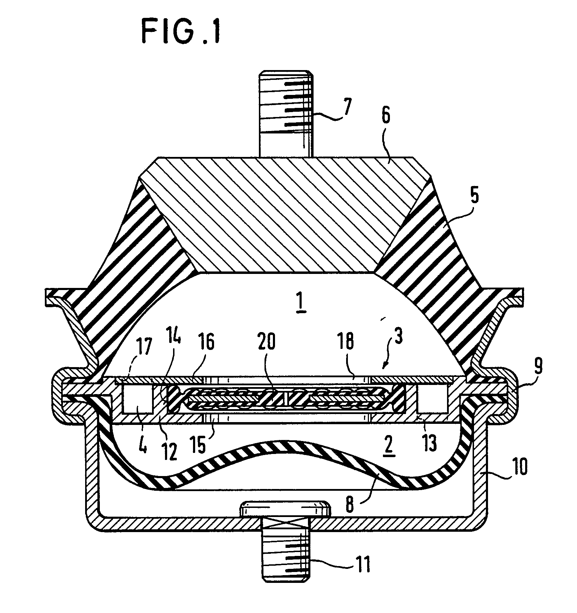

Wie aus Fig. 1 zu ersehen ist, weist das Zweikammer-Motorlager zunächst in herkömmlicher Weise einer obere motorseitige Kammer 1 und eine untere Ausgleichskammer 2 auf, die über einen, in einer Zwischenplatte 3 verlaufenden Kanal 4 miteinander in Verbindung stehen. Die obere Kammer 1 wird von einer starkwandigen, hohlkegelförmigen Kammerwandung 5, der sogenannten Tragfeder begrenzt, die an der oberen Stirnseite eine Lagerplatte 6 mit einem Bolzen 7 zur Festlegung am nicht näher dargestellten Motor aufweist. Die untere Kammer 2 ist von einer beispielsweise tassenförmigen Kammerwandung 8 aus ebenfalls gummielastischem, jedoch volumennachgiebigerem Material als das der Kammerwandung 5 gebildet, da die Kammer 2 praktisch nur als Ausgleichskammer fungiert. Alle Lagerteile sind über einen umlaufenden Ringflansch 9 flüsigkeitsdicht miteinander verspannt, wobei der Ringflansch 9 gleichzeitig den unteren Gehäusedeckel 10 mit einem Anschlußbolzen 11 zur Festlegung des Lagers an die Fahrzeugkarosserie mit erfaßt.

Nach dem dargestellten Ausführungsbeispiel besteht die Zwischenplatte 3 aus einer Bodenplatte 12, in die der ringförmige Verbindungskanal 4 mit einer gestrichelt angedeuteten Durchtrittsöffnung 13 zur Unterseite einge schnitten ist. Ferner weist die Bodenplatte 12 eine zentrale, zylindrische Ausnehmung 14 auf, deren Unterseite mit einer zentralen Öffnung 15 oder entsprechenden Durchbrüchen versehen ist. Die in die Bodenplatte 12 eingeschnittenen Ausnehmungen 4 und 14 können dann durch eine zentrisch aufgesetzte Deckplatte 16 verschlossen sein, wobei diese Deckplatte 16 eine gestrichelt angedeutete Öffnung 17 als Verbindung vom Ringkanal 4 zur oberen Kammer 1 und eine zentrale Öffnung 18 oberhalb der Membrankammer 14 aufweist.

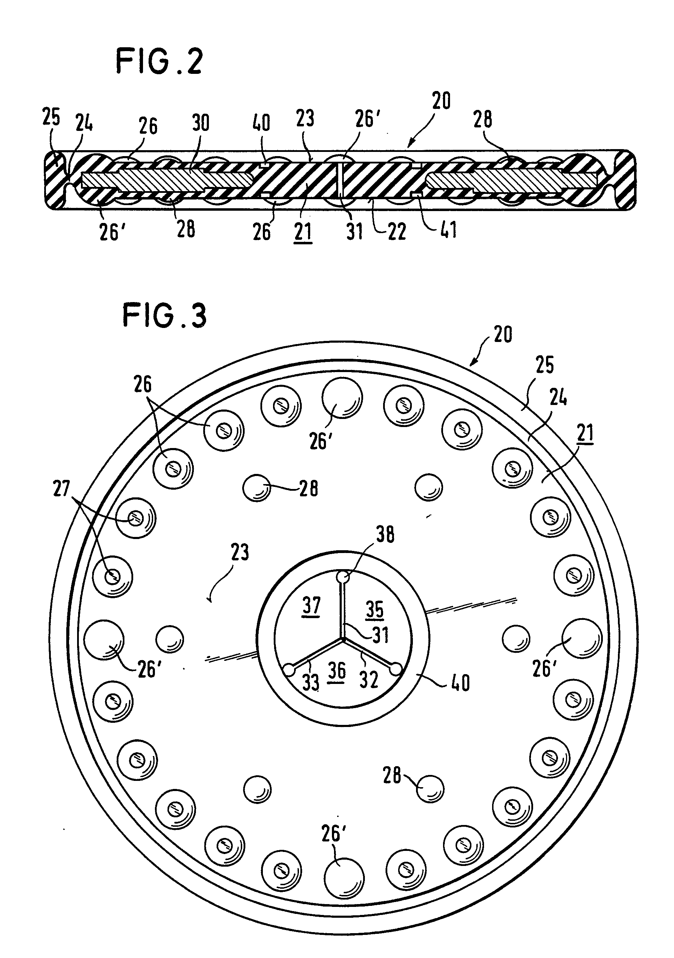

In die somit durch die Ausnehmung 14 gebildete Kammer ist nunmehr eine kreiszylindrische Membranplatte 20 aus gummielastischem Material eingesetzt, die im vergrößerten Maßstab anhand Fig. 2 und 3 im einzelnen erläutert wird. Diese Membranplatte 20 weist einen kreisscheibenförmigen Membrankörper 21 mit planparallelen Stirnflächen 22 und 23 auf und steht am Außenumfang über einen dünnen, horizontalen Steg 24 mit einem zylindrischen Rand 25 in Verbindung.

Wie man am besten aus der Aufsicht nach Fig. 3 erkennt, sind auf der Oberseite 23 entlang einer Kreislinie im umfangsnahen Bereich eine Vielzahl von kugelkalottenförmigen Noppen 26 angeordnet. Diese Noppen 26 haben jedoch zweckmäßigerweise unterschiedliche Höhe und zwar derart, daß beispielsweise vier Noppen 26', die jeweils um 90° zueinander versetzt liegen, eine größere Höhe als die Noppen 26 aufweisen. Dies kann auch dadurch erreicht werden, daß die Noppen 26' voll kugelkalottenförmig ausgebildet sind, während die Noppen 26 an ihrer Spitze eine Abflachung 27 aufweisen.

Zusätzlich zu dieser Reihe Noppen 26 können auf einer weiteren innenliegenden Kreislinie weitere Noppen 28 an geordnet sein, die noch kleiner sind bzw. eine noch geringere Höhe als die Noppen 26 haben.

Wenn eine derartige Membranplatte 20 jetzt in eine Membrankammer 14 entsprechend Fig. 1 eingebaut und durch die Platte 16 abgedeckt ist, ergibt sich aufgrund der entsprechenden Dimensionierung, daß diese Membranplatte 20 allein über den Randbereich 25 flüsigkeitsdicht eingespannt ist, da dieser Randbereich 25 eine größere Höhe als der zentrale Membranbereich 21 einschließlich der höheren Noppen 26' aufweist. Durch die flexible Anlenkung über den dünnen Steg 24 kann der Zentralbereich 21 der Membranplatte 20 leicht durch eingeleitete Schwingungen in axialer Richtung ausgelenkt werden, wobei nach einer entsprechenden Auslenkung zunächst die höheren Noppen 26' mit dem Zwischenplattenboden 12 bzw. der Abdeckplatte 16 in Kontakt kommen. Bei stärkeren Schwingungen oder höheren Drücken werden dann die Noppen 26' soweit verformt bzw. abgeplattet, daß anschließend die Noppen 26 und schließlich die Noppen 28 mit der jeweiligen Begrenzungsfläche in Kontakt kommen, so daß durch dieses gestaffelte Anlegen ein sanfter Anschlag ohne Klappergeräusche gewährleistet ist.

Zur Versteifung der Membranplatte 20 und auch zur Erhöhung ihres Gewichtes ist bei dem dargestellten Ausführungsbeispiel nach Fig. 2 in den zentralen Membrankörper 21 eine Ringscheibe 30 aus Metall oder Kunststoff eingebettet, die allseits vom elastomeren Material umgeben ist. Dieser Ring 30 verhindert einmal ein Auswölben der Membranplatte 20 und stellt zum anderen ein höheres Gewicht, d.h. eine Tilgermasse dar, mit der das Schwingungsverhalten der Membranplatte entsprechend beeinflußt werden kann.

Um bei Auftreten besonders hoher Drücke in der Arbeitskammer 1 eine Schädigung der Zwischenplatte 3 oder der Membranplatte 20 zu verhindern, ist ferner vorgesehen, daß die Membranplatte 20 im zentralen Bereich mindestens drei von ihrem Mittelpunkt ausgehende und die Membranplatte 20 radialer Richtung auftrennende Schlitze 31, 32 und 33 aufweist, mit denen damit drei in axialer Richtung abklappbare Kreissegmente 35, 36 und 37 freigeschnitten sind. Das bedeutet, daß bei hohem Druck ein Bypaß durch die Mitte der Membranplatte 20 geschaffen wird, wobei diese freigeschnittenen Kreissegmente 35, 36 und 37 praktisch als Ventilklappen wirken.

Zur leichteren Beweglichkeit und Spannungsentlastung können dabei die radial außenliegenden Enden der Schlitze 31, 32 und 33 mit kreiszylindrischen Erweiterungen 38 versehen und der gesamte Bereich der Einschnitte von einer umlaufenden, in die jeweilige Plattenoberfläche 22 bzw. 23 eingeschnittene Nut 40 bzw. 41 umgeben sein.

Die Schlitze 31, 32 und 33 liegen dabei innerhalb des von dem Ring 30 überdeckten Bereich, womit einerseits ein weiteres Aufreißen der Schlitze 31, 32 und 33 als auch eine unerwünschte größere Durchbiegung der Membranplatte 20 bei hohen Drücken verhindert wird.

Insgesamt ergibt sich also eine Membranplatte, die sehr leicht beweglich gelagert ist, ohne Geräuschentwicklung an ihrer oberen und unteren Begrenzung anschlägt und zusätzlich noch praktisch als Funktion eines Überdruckventils einen Bypaß freigibt, wodurch eine Schädigung der Halterungsbereiche der Membranplatte vermieden wird. Bei größeren Anregungsamplituden niedriger Frequenz bewirkt dieser Bypaß parallel zu dem ringförmigen Kanal 4 darüber hinaus noch eine Vergrößerung der Bandbreite der maxima len Dämpfungsarbeit über den Frequenzbereich, wodurch eine zusätzliche Optimierung des Lagers gegeben ist.

**Ansprüche**

1. Hydraulisch dämpfendes Zweikammer-Motorlager, dessen mit Flüssigkeit gefüllte und gummielastische Umfangswände aufweisende Kammern über einen, in einer starren Zwischenplatte angeordneten Kanal miteinander in Verbindung stehen und in dessen Zwischenplatte eine stirnseitig zumindest zentral offene Kammer eingelassen ist, in der eine beidseitig von Flüssigkeit beaufschlagte und parallel zur Richtung eingeleiteter Schwingungen bewegliche Membranplatte aus gummielastischem Material eingespannt ist, dadurch gekennzeichnet, daß die mit planparallelen Stirnflächen (22, 23) ausgebildete Membranplatte (20) einen umlaufenden, über einen horizontalen Steg (24) geringer Dicke mit der Membranplatte (20) elastisch verbundenen, zylindrischen Randbereich (25) von mindestens gleicher Höhe wie die der Membranplatte (20) aufweist, und daß auf der Ober- und Unterseite (22, 23) der Membranplatte (20) auf einer gedachten Kreislinie im dem Außenumfang benachbarten Bereich eine Vielzahl von kugelkalottenförmigen Noppen (26, 26') angeordnet sind.

2. Motorlager nach Anspruch 1, dadurch gekennzeichnet, daß mindestens vier der Noppen (26') im gleichmäßig über dem Umfang verteilten Abstand eine geringfügig größere Höhe als die übrigen Noppen (26) aufweisen.

3. Motorlager nach Anspruch 1 oder 2, dadurch gekennzeichnet, daß radial innerhalb der außenliegenden Noppen (26) eine weitere, auf einer Kreislinie liegende Reihe von Noppen (28) vorgesehen sind, die eine geringere Höhe als die radial außenliegenden Noppen (26) aufweisen.

4. Membranplatte nach Anspruch 2, dadurch gekennzeichnet, daß der umlaufende Randbereich (25) eine größere Höhe als die höchsten Noppen (26') aufweist.

5. Motorlager nach einem der Ansprüche 1 bis 4, dadurch gekennzeichnet, daß in die Membranplatte (20) ein scheibenförmiger Ring (30) aus starrem Material eingebettet ist.

6. Motorlager nach einem oder mehreren der Ansprüche 1 bis 5, dadurch gekennzeichnet, daß die Membranplatte (20) mit mindestens drei, von ihrem Mittelpunkt ausgehenden und die Membranplatte (20) in radialer Richtung auftrennenden Schlitzen (31, 32, 33) versehen ist, mit denen mindestens drei in axialer Richtung abklappbare Kreissegmente (35, 36, 37) freigeschnitten sind.

7. Motorlager nach Anspruch 6, dadurch gekennzeichnet, daß die Schlitze (31, 32, 33) am radial außenliegenden Ende (38) kreiszylindrisch aufgeweitet sind.

8. Motorlager nach Anspruch 6 oder 7, dadurch gekennzeichnet, daß der geschlitzte Bereich der Membranplatte (20) mindestens auf einer Plattenseite (22, 23) von einer umlaufenden, in die Plattenoberfläche eingeschnittenen Nut (40, 41) umgeben ist.

9. Motorlager nach Anspruch 6, dadurch gekennzeichnet, daß sich die radialen Schlitze (31, 32, 33) über den Bereich der Membranplatte (20) innerhalb des Innenumfangs des metallischen Ringes (30) erstrecken.

10. Membranplatte nach Anspruch 3, dadurch gekennzeichnet, daß Deckel (16) und Boden (15) der Membrankammer (14) die Membranplatte (20) mindestens bis in den Bereich der innenliegenden Noppen (28) überdecken.

# FIG.1

FIG.2

FIG.3